# EUROPÄISCHE PATENTANMELDUNG

(11) **EP 0 688 972 A1**
(43) Veröffentlichungstag der Anmeldung: **27.12.1995**
(21) Anmeldenummer: 94109671.1
(22) Anmeldetag: 22.06.1994
(51) Int. Cl.: F16F 13/24

(54) **Fluidischer Dämpfer**

(71) Anmelder: WOCO Franz-Josef Wolf & Co., D-63628 Bad Soden-Salmünster (DE)
(72) Erfinder: Wolf, Franz-Josef, D-63628 Bad Soden-Salmünster (DE); Nix, Stefan, D-63607 Wächtersbach-Aufenau (DE)
(74) Vertreter: Jaeger, Klaus, Dr.

(57) **Zusammenfassung**

Bei einem fluidischen Dämpfer, insbesondere für dynamische Lager, mit mindestens einer Arbeitskammer, die mindestens eine verformbare Kammerwand (5,6) aufweist, ein Dämpferfluid enthält und über mindestens eine Drosselöffnung oder mindestens einen Drosselkanal mit einer Ausweichkammer für das Fluid in Verbindung steht, wobei die Drosselöffnung oder der Drosselkanal in einem zumindest im wesentlich starken Wandbereich der Arbeitskammer ausgebildet und die Arbeitskammer innerhalb eines Gehäuses (2) angeordnet ist ist vorgesehen, daß die verformbare Wand der Arbeitskammer aus einem Elastomer oder einem anderen druckfesten und fluiddichten Werkstoff gebildet ist und die Arbeitskammer eine weitgehende Ausbildung besitzt derart, daß die Außenwand der Arbeitskammer nur einen geringfügigen lichten Abstand zum Gehäuse aufweist.

## Beschreibung

Die vorliegende Erfindung betrifft einen fluidischen Dämpfer gemäß dem Oberbergiff des Anspruchs 1.

Speziell betrifft die Erfindung einen fluidischen Dämpfer zum Bedämpfen weicher Tragfedern.

Im Bereich der Konsumgüter, insbesondere im Kraftfahrzeugbau, spielen Merkmale des Benutzungskomforts eine zunehmend wichtigere Rolle.

Dies führt im Bereich der Federtechnik und der Lagertechnik zu einem steigenden Bedarf an zunehmend weicheren Tragfedern und Lagerfedern.

Bei vergleichsweise großen Massen führt aber die Verwendung weicher und sehr weicher Federn zu zwei prinzipiellen Problemen. Zum ersten werden die Federkörper mit weichen Kennlinien mechanisch schwach und instabil und zum zweiten werden die Federamplituden so groß, daß eine solcherart weich eingestellte Feder zu einer tatsächlichen Verringerung des Komforts, beispielsweise des Fahrkomforts eines Kraftfahrzeugs führt, anstatt ihn zu verbessern.

Neben diesem von mechanischen Schwingungen hervorgerufenen Komfortproblem treten bei derartigen Kraftfahrzeugen auch von akkustischen Schwingungen hervorgerufene Probleme auf, die ohne eine entsprechende Dämpfung zu äußerst unangenehmen Vibrationen und Geräuschen beispielsweise im Innenraum des Fahrzeugs führen.

Nachdem in jüngerer Zeit mechanisch dauerhafte und feste sowie schwingungstechnisch extrem weiche und akustisch gleichzeitig gut abkuppelnde Gummifederblöcke bekanntgeworden sind (US 4,750,720 A und US 4,776,573 A), haben sich diese Gummifedern in der Praxis erstaunlich schnell eingeführt, obwohl für schwingungssensible Systeme die Frage der Dämpfung des neuen weichen Gummifeder-Systemblocks noch nicht gelöst war.

Zur Bedämpfung weicher Federn, insbesondere zur Bedämpfung von Federn der aus den beiden vorstehend genannten US-Patenten genannten Art, ist aus der deutschen Offenlegungsschrift DE 37 42 340 A1 eine Dämpfervorrichtung bekannt, bei der eine mit dem Auflastanschluß der weichen Tragfeder über eine Koppelstange verbundene Anschlagscheibe zwischen zwei Dämpfungsringen schwingt, die als Wegbegrenzer für den Federweg der weichen Gummifeder dienen. Die ringförmigen Dämpferelemente sind Ringschläuche aus einem elastischen Werkstoff, die mit einem dämpfenden fließfähigen Schüttgut gefüllt sind.

Das Problem dieses Dämpfers liegt darin, daß er gerade dort zu unbefriedigenden Ergebnissen führt, wo die Dämpfung der weichen Tragfeder sowohl interessant als auch gleichzeitig problematisch wird, nämlich im Bereich großer Störamplituden. In diesem Bereich erzeugt der bekannte Dämpfer eine harte, anschlagartige Begrenzung des Federwegs der weichen Tragfeder und vermag damit noch nicht den Durchbruch zu einer komfortablen, d.h. insbesondere weich einsetzenden Dämpfung der weichen Tragfeder herbeizuführen.

Ein ähnliches Dämpfungssystem, bei dem ein zu bedämpfendes dynamisch belastetes Maschinenteil, hier speziell eine elektromagnetisch beaufschlagte Bremse und eine Dämpfervorrichtung separat voneinander ausgebildet und über eine gemeinsame Koppelstange miteinander verbunden sind, ist aus der deutschen Patentschrift DE 684 075 C1 bekannt. Diese Koppelstange ist dabei mit einem hydraulischen Dämpfer verbunden, der aus zwei über eine Drosselstelle miteinander kommunizierenden Arbeitskammern besteht. Das Volumen dieser Arbeitskammern wird über die Drosselstange verändert, wodurch über den Drosselkanal eine übliche hydraulische Dämpfung erhalten wird. Die Arbeitskammern sind durch starre Stirnwände begrenzt, die ein Wellrohr an den Stirnseiten druckfest hydraulisch abdichtend verschließen. Die Wände des Wellrohrs sind in axialer Richtung so stark gewählt, daß in axialer Richtung der Arbeitskammer, d.h. in Richtung der zu bedämpfenden Störkraft, die über die Koppelstange aufgebracht wird, im unbelasteten und unverformten Zustand des Wellrohres kein axial linear durchgehendes Tragvolumenelement in der zylindrischen Wellrohr-Arbeitskammerwand besteht. Dennoch sind diese Arbeitskammerwände axial elastisch, und zwar aufgrund der hohen Biegemomente des Wellrohrmaterials. Mit anderen Worten, die Wellrohre bestehen offensichtlich aus einem Federstahl, zumindest einem elastisch federnden Stahl.

Dieser Dämpfer ist zur Bedämpfung weicher Tragfedern ungeeignet, da er nicht nur als Dämpfer, sondern primär als bedämpfte Stahlfeder wirkt. Eine solche Zusatzfederung würde jedoch die durch die weichen Tragfedern, insbesondere weichen Gummitragfedern, erzielten Fortschritte der weichen Lagertechnik durch Kennlinienverschiebungen und Kennlinienverfälschungen zunichte machen.

Zur Bedämpfung weicher Elastomertragfedern ist es auch bekannt, einen fluidischen Dämpfer mit einer an sich praktisch kraftlos verformbaren Artbeitskammer zu verwenden, wobei die Arbeitskammer von einer verformbaren Kammerwand gebildet ist, in der ein Dämpfungsfluid enthalten ist und die zudem über eine Drosselöffnung oder einen Drosselkanal mit einer Ausweichkammer in Fluidverbindung steht, wobei die Drosselöffnung in einer weitgehend starren Wandung der Arbeitskammer ausgebildet ist und die verformbare Kammerwand im Schnitt ein sanduhrartiges Profil mit Einschnürungen aufweist.

Diese Einschnürungen haben dabei die Funktion, die verformbare Kammerwand in sich leicht verformbar zu machen derart, daß es bei einer Beaufschlagung der Arbeitskammer zu einer Verformung der Kammerwand kommt, die dazu führt, daß das innerhalb der Arbeitskammer angeordnete Fluid aus der Arbeitskammer durch die Drosselöffnung in der starren Wand in die Ausweichkammer verpresst wird und somit die gewünschte Dämpfungsarbeit erzeugt wird.

Wenn diese faltenbalgartige Ausbildung von einer Erregeramplitude beaufschlagt wird, so führt dies zu einer Verformung der gesamten Arbeitskammer. Die dabei ablaufenden Niveauänderungen werden durch das Einfalten bzw. Zusammenfalten der faltenbalgartigen Ausbildung ausgeglichen. Die faltenbalgartige Ausbildung weist im unbelasteten Zustand des Dämpfers einen großen Abstand zum umgebenden Gehäuse auf, so daß es bei einer Beaufschlagung des Faltenbalgs zu einer Formänderung der gesamten verformbaren Kammerwandung kommt, was letztlich dazu führt, daß aufgrund der Einschnürungen des Faltenbalgs eine relativ hohe Steifigkeit des fluidischen Dämpfers vorliegt, die zu einem ungünstigen akkustischen Isolationsverhalten führt.

Ausgehend hiervon liegt der vorliegenden Erfindung zur Beseitigung der geschilderten Nachteile die Aufgabe zugrunde, einen fluidischen Dämpfer zu schaffen, der einerseits hohe Verlustarbeiten zu leisten in der Lage ist und dabei andererseits auch ein gutes Geräuschisolationsverhalten ermöglicht.

Die zur Lösung dieser Aufgabe geschaffene Erfindung weist die im Anspruch 1 angegebenen Merkmale auf. Vorteilhafte Ausgestaltungen hiervon sind in den weiteren Ansprüchen beschrieben.

Erfindungsgemäß ist ein fluidischer Dämpfer, insbesondere für dynamische Lager vorgesehen, der mindestens eine Arbeitskammer aufweist, die mindestens eine verformbare Kammerwand besitzt, ein Dämpfungsfluid enthält und über mindestens eine Drosselöffnung oder mindestens einen Drosselkanal mit einer Ausweichkammer für das Fluid in Verbindung steht, wobei die Drosselöffnung oder der Drosselkanal in einem zumindest im wesentlichen starren Wandbereich der Arbeitskammer ausgebildet und die Arbeitskammer innerhalb eines Gehäuses angeordnet ist und die verformbare Wand der Arbeitskammer aus einem Elastomer oder einem anderen druckfesten und fluiddichten Werkstoff gebildet ist, wobei die Arbeitskammer eine solche Ausbildung besitzt, daß im unbelasteten Zustand des Dämpfers zwischen der Außenwand der Arbeitskammer und dem Gehäuse nur ein geringfügiger lichter Abstand vorgesehen ist.

In vorteilhafter Weise führt dies dazu, daß nicht die gesamte Arbeitskammer einer Verformung unterliegt, sondern sich die Außenwand der Arbeitskammer nach Überwindung des nur geringfügigen lichten Abstandes zum Gehäuse am Gehäuse anlegt und dann diese Flächen am Gehäuse ruhen.

Es ist dabei von Vorteil, daß die verformbare Kammerwand nur eine geringfügige eigene Steifigkeit besitzt und daher nicht zu einem Ansteigen einer die Geräuschübertragung fördernden dynamischen Federrate führt.

In vorteilhafter Weise ist dabei gemäß der Erfindung vorgesehen, daß die verformbare Kammerwand als im Grundrißschnitt weitgehend kreisringförmige Membran ausgebildet derart, daß die obere und untere Deckfläche sowie die äußere Mantelringfläche der Membran mit nur geringfügigem lichten Freiweg zum Gehäuse angeordnet ist, so daß nur ein geringer Freiweg zwischen diesen Membranstellen und dem Gehäuse zu überbrücken ist derart, daß sich nach Anlage der Membran an dem Gehäuse die geringe Grundsteifigkeit der Arbeitskammer und die Steifigkeit des Gehäuses zu einer Gesamtsteifigkeit addieren, wodurch eine deutliche Steigerung der erreichbaren Verlustarbeit erzielbar ist. Gemäß der Erfindung ist daher vorgesehen, daß sich die untere oder obere Deckfläche sowie die äußere Mantelringfläche der Membran bei aktiver Arbeitskammer am Gehäuse weitgehend unverformbar anlegt, während nur mehr die innere Mantelringfläche der Membran verformbar ist. Dies führt in vorteilhafter Weise dazu, daß sich die Dämpfergrundsteifigkeit auf ein Minimum verringert, und daher eine niedrige dynamische Federrate mit gutem Geräuschisolationsverhalten erzielbar ist. Es bedeutet dies, daß der erfindungsgemäße Dämpfer im Bereich hoher Störfrequenzen und kleiner Störamplituden nur eine geringe Dämpfergrundsteifigkeit aufweist und daher in einem solchen Belastungsfall für eine gute Geräuschabkopplung sorgt.

In Fortbildung der Erfindung ist dabei die Membran im Bereich ihrer inneren Mantelringfläche an einer Kuppelstange angeordnet derart, daß eine die Kuppelstande axial beaufschlagende insbesondere dynamische Kraft über die Membran in das Gehäuse bedämpft einleitbar ist.

In Weiterbildung der Erfindung weist dabei die Membran im Bereich ihrer inneren Mantelringfläche in fortschreitender axialer Richtung der Kuppelstange einen zunehmenden radialen Abstand zum Außenumfang der Kuppelstange auf derart, daß sich eine im Axiallängsschnitt der Kuppelstange weitgehend X-förmige Ausbildung der inneren Mantelringfläche der Anordnung symetrisch um die Kuppelstangenlängsachse ergibt. Es führt diese Ausbildung dazu, daß bei einer Kraftbeaufschlagung der Kuppelstange nur mehr der Bereich der Anbindungspunkte der Membran an der Kuppelstange verformt wird, wodurch sich die bereits angesprochene Dämpfergrundsteifigkeit auf ein Minimum reduziert.

Die Membran ist dabei gemäß der Erfindung im Bereich ihrer Anordnung an der Kuppelstange von einem im Axiallängsschnitt radial nach außen offenen und mit der Kuppelstange in Wirkverbindung stehenden U-förmigen Profil übergriffen.

In Fortbildung der Erfindung ist in der Drosselöffnung bzw. dem Drosselkanal mindestens ein Durchflußsteuerventil angeordnet derart, daß der Fluidaustausch zwischen der Arbeitskammer und der Ausweichkammer steuerbar ist.

Damit ist in vorteilhafter Weise erreichbar, daß ein bidirektional wirkender Dämpfer mit mindestens zwei einander über die Drosselöffnung oder dem Drosselkanal gegenüberliegenden Arbeitskammern gebildet ist, der in seinen beiden Arbeitsrichtungen aufgrund der Steuerbarkeit der Durchflußsteuerventile voneinander abweichende Dämpfungseigenschaften aufweist. Aufgrund der der Arbeitskammer innewohnenden niedrigen eigenen Grundsteifigkeit ist eine Entkopplung im Dämpfer nicht mehr nötig.

Dadurch, daß bei erfindungsgemäßer Ausbildung die Arbeitskammer zur Erzielung der Verlustarbeit keine hohe eigene Grundsteifigkeit aufweist, besitzt der fluidische Dämpfer bis zu hohen Erregungsfrequenzen eine geringe Steifigkeit und damit ein gutes Geräuschisolationsverhalten.

Schließlich ist gemäß der Erfindung vorgesehen, daß in der Arbeitskammer und/oder der Membran ein beispielsweise als Wegbegrenzer vorgesehener Anschlag angeordnet ist.

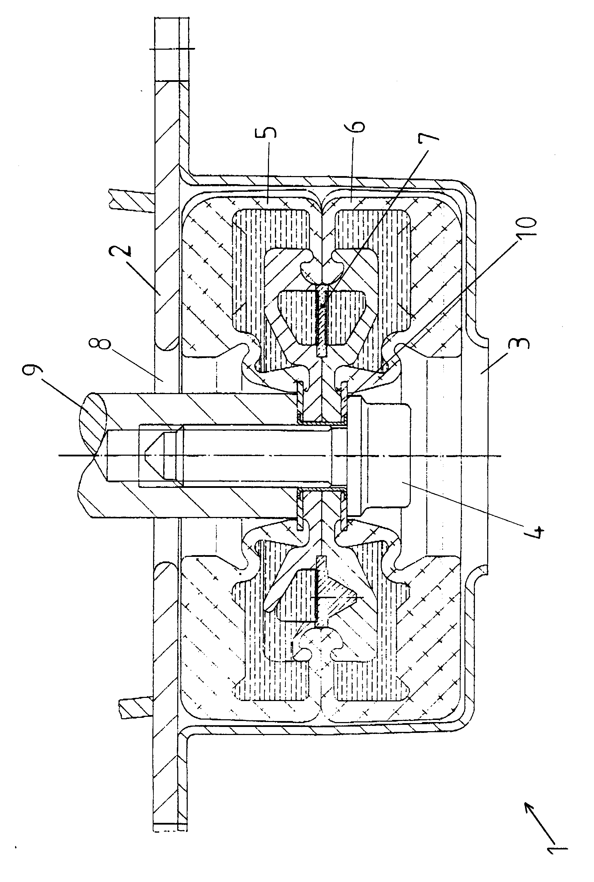

Die Erfindung wird im folgenden anhand der einzigen Zeichnung näher erläutert, die einen fluidischen Dämpfer im Axialschnitt zeigt.

Wie aus der Zeichnung ersichtlich, ist der dargestellte fluidische Dämpfer 1 in einem allgemeinen mit 2 bezeichneten Gehäuse angeordnet. Das geteilt ausgeführte Gehäuse 2 weist dabei auf seiner Unterseite eine Durchlaßöffnung 3 auf, in die beispielsweise ein nicht dargestelltes Werkzeug zum kraftschlüssigen Eingriff mit dem Schraubbolzen 4 einführbar ist.

Im dargestellten Ausführungsbeispiel wird eine Arbeitskammer von einer als Membran ausgebildeten verformbaren Kammerwand 5 gebildet, der eine von einer verformbaren Kamerwand 6, die gleichfalls als Membran ausgebildet ist, gebildete Ausweichkammer gegenüberliegt.

Sowohl die Arbeitskammer als auch die Ausgleichskammer sind im dargestellten Ausführungsbeispiel mit einem hydraulischen Arbeitsfluid verfüllt und stehen über einen nicht näher dargestellten Ringkanal in Fluidverbindung. Zwischen den verformbaren Kammerwänden 5, 6 ist eine Trägerscheibe 7 angeordnet, die auch der Aufnahme der Durchlaßöffnungen bzw. der Durchlaßkanäle oder dem Ringkanal dient und in der auch nicht näher dargestellte Durchflußsteuerventile angeordnet sein können.

Wie aus der Zeichnung ersichtlich, weist das Gehäuse 2 in der der Durchlaßöffnung 3 gegenüberliegenden Seite eine weitere Durchlaßöffnung 8 auf, durch die sich eine Kuppelstange 9 erstreckt, die an ihrem unteren Ende in Schraubeingriff mit dem Schraubbolzen 4 steht.

Im Bereich dieses Eingriffendes der Kuppelstange 9 ist ein sich im Axialschnitt radial nach außen öffnendes U-förmiges Profil 10 vorgesehen, wobei die sich zur Kuppelstange 9 hin erstreckenden radial innenliegenden Enden der verformbaren Kammerwand 5, 6 vom Profil 10 übergriffen sind und über den Schraubbolzen 4 in Wirkverbindung mit der Kuppelstange 9 angeordnet sind.

Wenn nunmehr die Kuppelstange 9 mit einer insbesondere dynamisch wirkenden Kraft axial beaufschlagt wird, so führt dies zu einer Axialbewegung der Kuppelstange 9, die zu einer verformenden Bewegung der verformbaren Kammerwand 5, 6 führt, wodurch, abhängig von der Richtung der Axialbewegung der Kuppelstange 9 entweder die verformbare Kammerwand 5 oder die verformbare Kammerwand 6 in Druckrichtung beaufschlagt wird, während die jeweils gegenüberliegende Kammerwand in Zugrichtung beaufschlagt wird.

Eine derartige Kraftbeaufschlagung führt dazu, daß sich die verformbare, als Membran ausgebildete Kammerwand 5, 6 verformt und den aus der Zeichnung ersichtlichen geringfügigen lichten Abstand zwischen den jeweiligen Mantelringaußenflächen der Membranen und den oberen bzw. unteren Deckflächen der Membranen zum Gehäuse 2 überwindet, da eine derartige Kraftbeaufschlagung zu einem Fluidaustausch zwischen der Arbeitskammer und der Ausgleichskammer führt derart, daß der Innendruck in der jeweiligen Ausgleichskammer ansteigt und sich somit die verformbare Kammerwand der Ausgleichskammer am Gehäuse 2 nach Überbrücken des lichten Freiweges anlegt.

Dadurch kommt es zu einer Addition der Steifigkeit der Arbeitskammer und des Gehäuses zu einer Gesamtsteifigkeit, wodurch die erreichbare Verlustarbeit erheblich ansteigt.

Andererseits wird durch eine derartige Kraftbeaufschlagung der zur Kuppelstange 9 hin gerichtete mantelringinnenflächenseitige Bereich der verformbaren Kammerwand 5, 6 nach Anliegen der Deckfläche und der Mantelfläche am Gehäuse 2 verformt, so daß sich nur mehr die Anbindungspunkte der Membran, die sogenannten Lippen, verformen. Dies ist dabei so zu verstehen, daß sich nur mehr die Bereiche der Membran 5, 6 verformen, die sich auch schon bei unbelastetem Dämpfer 1 in der Nähe der Kuppelstange 9 befinden. Diese Bereiche verformen sich bei aktivem Dämpfen derart, daß eine Annäherung zwischen der Kuppelstange 9 und dem jeweiligen sich nahe der Kuppelstange 9 befindlichen Bereich der Mantelringinnenfläche der im Schnitt kreisförmigen Membran 5, 6 stattfindet, ohne daß sich diese Bereiche der Membran 5, 6 und die Kuppelstange 9 berühren.

Die Membran selbst besitzt dabei eine nur geringe Steifigkeit, so daß diese Anordnung ein niedrige dynamische Federrate besitzt und damit über ein ausgesprochen gutes Geräuschisolationsverhalten verfügt, so daß eine zusätzliche Entkopplung im Dämpfer nicht mehr nötig ist. Damit ist gleichzeitig eine kostengünstige Dämpferanordnung geschaffen.

Hinsichtlich vorstehend im einzelnen nicht näher erläuterter Merkmale der Erfindung wird im übrigen ausdrücklich auf die Ansprüche und die Zeichnung verwiesen.

## Patentansprüche

1. Fluidischer Dämpfer, insbesondere für dynamische Lager, mit mindestens einer Arbeitskammer, die mindestens eine verformbare Kammerwand aufweist, ein Dämpfungsfluid enthält und über mindestens eine Drosselöffnung oder mindestens einen Drosselkanal mit einer Ausweichkammer für das Fluid in Verbindung steht, wobei die Drosselöffnung oder der Drosselkanal in einem zumindest im wesentlichen starren Wandbereich der Arbeitskammer ausgebildet und die Arbeitskammer innerhalb eines weitgehend starren Gehäuses angeordnet ist,
dadurch **gekennzeichnet**,
daß die verformbare Wand (5,6) der Arbeitskammer aus einem Elastomer oder einem anderen druckfesten und fluiddichten Werkstoff gebildet ist und die Arbeitskammer eine Ausbildung besitzt derart, daß die Außenwand der Arbeitskammer im unbelasteten Zustand nur einen geringfügigen lichten Abstand zum Gehäuse (2) aufweist.

2. Dämpfer nach Anspruch 1,
dadurch **gekennzeichnet**,
daß die verformbare Kammerwand im Grundrißschnitt als weitgehend kreisringförmige Membran ausgebildet ist derart, daß die obere und untere Deckfläche sowie die äußere Mantelringfläche der Membran mit geringfügigem lichten Freiweg zum Gehäuse (2) angeordnet ist.

3. Dämpfer nach Anspruch 1 oder 2,
dadurch **gekennzeichnet**,
daß die obere und/oder untere Deckfläche sowie die äußere Mantelringfläche der Membran bei aktiver Arbeitskammer am Gehäuse (2) weitgehend unverformbar anliegt, während die innere Mantelringfläche der Membran verformbar ist.

4. Dämpfer nach einem der Ansprüche 1 bis 3,
dadurch **gekennzeichnet**,
daß die Membran im Bereich ihrer inneren Mantelringfläche an einer Kuppelstange (9) angeordnet ist derart, daß eine die Kuppelstange (9) axial beaufschlagende insbesondere dynamische Kraft über die Membran in das Gehäuse (2) bedämpft einleitbar ist.

5. Dämpfer nach Anspruch 3 oder 4,
dadurch **gekennzeichnet**,
daß die Membran im Bereich ihrer inneren Mantelringfläche in fortschreitender axialer Richtung der Kuppelstange (9) radial zunehmend beabstandet zum Außenumfang der Kuppelstange (9) an der Kuppelstange (9) angeordnet ist derart, daß sich eine im Axiallängsschnitt der Anordnung weitgehend X-förmige Ausbildung der inneren Mantelringfläche symetrisch um die Kuppelstangenlängsachse ergibt.

6. Dämpfer nach einem der Ansprüche 1 bis 5,
dadurch **gekennzeichnet**,
daß die Membran im Bereich ihrer Anordnung an der Kuppelstange (9) von einem im Axiallängsschnitt radial nach außen offenen und mit der Kuppelstange (9) in Wirkverbindung stehendem U-förmigen Profil (10) übergriffen ist.

7. Dämpfer nach einem der Ansprüche 1 bis 6,
dadurch **gekennzeichnet**,
daß in der Drosselöffnung oder dem Drosselkanal mindestens ein Durchflußsteuerventil angeordnet ist derart, daß der Fluidaustausch zwischen der Arbeitskammer und der Ausweichkammer steuerbar ist.

8. Dämpfer nach einem der Ansprüche 1 bis 7,
dadurch **gekennzeichnet**,
daß die Drosselöffnung oder der Drosselkanal ein Ringkanal ist.

9. Dämpfer nach einem der Ansprüche 1 bis 8,
dadurch **gekennzeichnet**,
daß die Drosselöffnung oder der Drosselkanal so ausgebildet ist, daß ein bidirektional wirkender Dämpfer mit mindestens zwei einander über die Drosselöffnung oder den Drosselkanal gegenüberliegenden Arbeitskammern gebildet ist, der in seinen beiden Arbeitsrichtungen voneinander abweichende Dämpfungseigenschaften aufweist.

10. Dämpfer nach einem der Ansprüche 1 bis 9,
dadurch **gekennzeichnet**,
daß das Fluid ein hydraulisches Arbeitsfluid oder ein Gas, insbesondere Luft ist.

11. Dämpfer nach einem der Ansprüche 1 bis 10,
dadurch **gekennzeichnet**,
daß in der Arbeitskammer und/oder der Membran ein insbesondere als Wegbegrenzer vorgesehener Anschlag angeordnet ist.

12. Verwendung des Dämpfers nach einem der Ansprüche 1 bis 10 zum insbesondere bidirektionalen Bedämpfen weicher Federn, speziell einer Gummifeder, die aus einem Elastomerblock gebildet ist, in dem jeweils mit gleichem Flächenabstand voneinander Scharen von jeweils achsparallel zueinander ausgerichteten Hohlkanälen ausgebildet sind, die einander von Schar zu Schar im Raum kreuzen, ohne einander zu schneiden und wobei jeder einzelne Kanal mindestens einer dieser Kanalscharen in regelmäßigen Abständen im Elastomerblock ausgebildete Hohlräume durchsetzt, deren Querschnittsfläche senkrecht zur Längsachse der Hohlkanäle größer als die transversale Querschnittsfläche des jeweiligen Hohlkanals ist und wobei die transversale Querschnittsfläche der Hohlkanäle möglichst klein, gleichzeitig aber zumindest so groß bemessen ist, daß sie bei einer dynamischen Belastung des Feder auf das in den Hohlkanälen und in den mit diesen kommunizierenden Hohlräumen befindliche Medium, in der Regel Luft, praktisch keine Drosselwirkung ausüben.
